(19) Europäisches Patentamt
European Patent Office
Office européen des brevets

(11) EP 4 414 762 A1

(12) EUROPEAN PATENT APPLICATION
published in accordance with Art. 153(4) EPC

(43) Date of publication:
14.08.2024 Bulletin 2024/33

(21) Application number: 22878435.1

(22) Date of filing: 30.09.2022

(51) International Patent Classification (IPC):
*G02B 6/44* (2006.01)

(52) Cooperative Patent Classification (CPC):
G02B 6/44

(86) International application number:
PCT/JP2022/036649

(87) International publication number:
WO 2023/058566 (13.04.2023 Gazette 2023/15)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 04.10.2021 US 202163251692 P

(71) Applicant: Fujikura Ltd.
Tokyo 135-8512 (JP)

(72) Inventors:
• YAMASHITA Noriaki
Sakura-shi, Chiba 285-8550 (JP)
• ISHIDA Itaru
Sakura-shi, Chiba 285-8550 (JP)
• OSATO Ken
Sakura-shi, Chiba 285-8550 (JP)

(74) Representative: Plasseraud IP
104 Rue de Richelieu
CS92104
75080 Paris Cedex 02 (FR)

(54) OPTICAL FIBER RIBBON

(57) An optical fiber ribbon includes a plurality of optical fibers disposed in a disposition direction perpendicular to a longitudinal direction and a plurality of connection parts. The plurality of connection parts are formed between two optical fibers adjacent in the disposition direction to connect the two optical fibers. The plurality of connection parts are disposed intermittently in the longitudinal direction and the disposition direction. The optical fiber ribbon has a first high-density region and a low-density region adjacent in the longitudinal direction. At least two connection parts having different positions from each other in the longitudinal direction and disposition direction among the plurality of connection parts are disposed in the first high-density region. A number density of the connection parts in the low-density region is lower than a number density of the connection parts in the first high-density region. In a kink test, a maximum value of an amount of increase in transmission loss occurring in light with a wavelength of 1550 nm propagating through the optical fiber is 1 dB or less.

FIG. 1

**Description**

[Technical Field]

The present invention relates to an optical fiber ribbon.

Priority is claimed on United States Patent Application No. 63/251,692 filed in the United States on October 4, 2021, the content of which is incorporated herein by reference.

[Background Art]

Conventionally, an optical fiber ribbon including a plurality of optical fibers and a plurality of connection parts are known (see, for example, Patent Document 1). The plurality of optical fibers are disposed in a disposition direction perpendicular to a longitudinal direction. The plurality of connection parts connect two optical fibers adjacent in the disposition direction. Patent Document 1 discloses an optical fiber ribbon having a connection region in which connection parts are disposed and a non-connection region in which connection parts are not disposed.

[Citation List]

[Patent Document]

[Patent Document 1] Japanese Unexamined Patent Application, First Publication No. 2021-43363

[Summary of Invention]

[PROBLEM TO BE SOLVED BY THE INVENTION]

Incidentally, in a case in which the optical fiber ribbon as described above is made into a cable or the like, a compressive stress may be applied to the optical fiber ribbon in a longitudinal direction. Here, in the non-connection region of the optical fiber ribbon, since the optical fibers are not fixed by the connection parts, there is a likelihood that the optical fibers will bend due to the compressive stress described above, thereby causing sharp bending (so-called kink). Occurrence of such a kink may lead to an increase in transmission loss of light that propagates through the optical fiber.

The present invention has been made in consideration of such circumstances, and an objective of the present invention is to provide an optical fiber ribbon in which it is possible to reduce an increase in transmission loss due to a kink.

[MEANS TO SOLVE THE PROBLEM]

In order to solve the above-described problems, an optical fiber ribbon according to one aspect of the present invention includes a plurality of optical fibers disposed in a disposition direction perpendicular to a longitudinal direction, and a plurality of connection parts formed between two optical fibers adjacent in the disposition direction to connect the two optical fibers, in which the plurality of connection parts are disposed intermittently in the longitudinal direction and the disposition direction, the optical fiber ribbon has a first high-density region and a low-density region adjacent in the longitudinal direction, at least two connection parts having different positions from each other in the longitudinal direction and disposition direction among the plurality of connection parts are disposed in the first high-density region, a number density of the connection parts in the low-density region is lower than a number density of the connection parts in the first high-density region, and when an end edge of the low-density region on a side opposite to the first high-density region is brought closer to the first high-density region in the longitudinal direction in a state in which the first high-density region is fixed and a tension of 100 gf is applied to the entire optical fiber ribbon, a maximum value of an amount of increase in transmission loss occurring in light with a wavelength of 1550 nm propagating through the optical fiber is 1 dB or less.

[EFFECTS OF THE INVENTION]

According to the above-described aspect of the present invention, it is possible to provide an optical fiber ribbon in which it is possible to reduce an increase in transmission loss due to a kink.

[Brief Description of Drawings]

FIG. 1 is a view illustrating an optical fiber ribbon according to a first embodiment.
FIG. 2 is a cross-sectional view taken along line II-II illustrated in FIG. 1.
FIG. 3A is a diagram showing results of a kink test on an optical fiber ribbon using an optical fiber a.
FIG. 3B is a diagram showing results of a kink test on an optical fiber ribbon using an optical fiber b.
FIG. 3C is a diagram summarizing a maximum value of an amount of increase in transmission loss in the kink test.
FIG. 4A is a diagram showing results of a twist test on the optical fiber ribbon using the optical fiber a.
FIG. 4B is a diagram showing results of a twist test on the optical fiber ribbon using the optical fiber b.
FIG. 4C is a diagram summarizing an amount of increase in transmission loss in the twist test.
FIG. 5 is a view illustrating an optical fiber ribbon according to a second embodiment.
FIG. 6 is a view illustrating an optical fiber ribbon according to a third embodiment.
FIG. 7 is a view illustrating an optical fiber ribbon according to a first modified example.
FIG. 8 is a view illustrating an optical fiber ribbon according to a second modified example.

[Description of Embodiments]

(First embodiment)

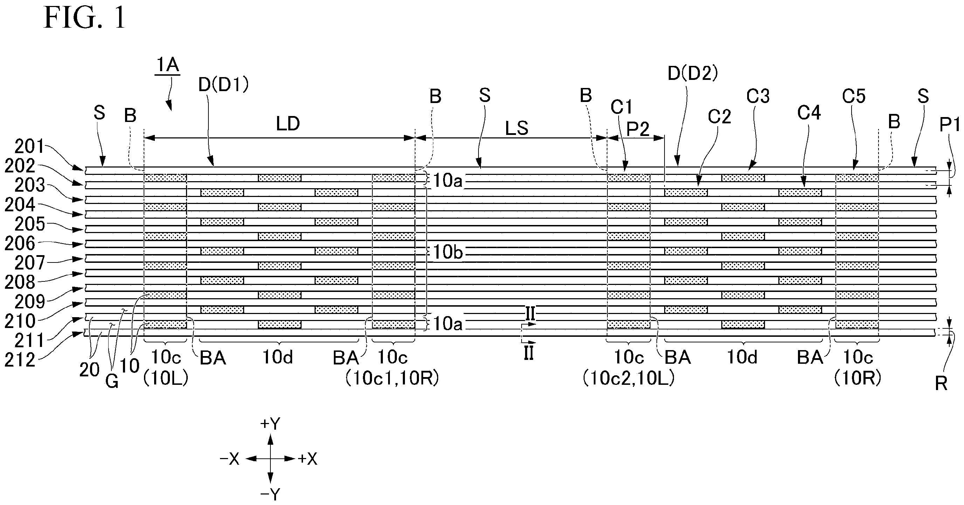

Hereinafter, an optical fiber ribbon according to a first embodiment will be described on the basis of the drawings.
As illustrated in FIG. 1, an optical fiber ribbon 1A includes a plurality of optical fibers 20. The plurality of optical fibers 20 are disposed in a direction perpendicular to a longitudinal direction of each of the optical fibers 20. The optical fiber ribbon 1A further includes a plurality of connection parts 10 connecting two optical fibers 20 adjacent to each other among the plurality of optical fibers 20.
In the example of FIG. 1, the optical fiber ribbon 1A includes twelve optical fibers 20. In the present specification, the optical fibers 20 may each be referred to as a first fiber 201 to a twelfth fiber 212 in order. However, the number of the optical fibers 20 may be changed as appropriate.

(Definition of directions)

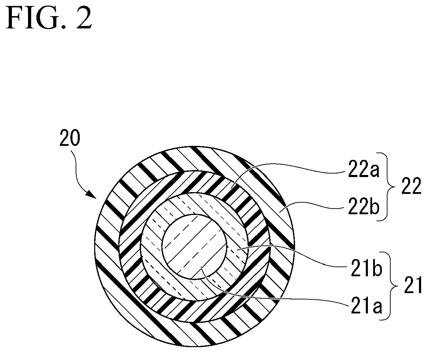

Here, in the present embodiment, an XYZ orthogonal coordinate system is set to describe a positional relationship of respective components. An X-axis direction is a longitudinal direction of the optical fiber ribbon 1A. A Y-axis direction is a direction in which the plurality of optical fibers 20 are disposed. A Z-axis direction is a direction orthogonal to both the X-axis direction and the Y-axis direction. In the present specification, the X-axis direction may be referred to as a longitudinal direction X, the Y-axis direction may be referred to as a disposition direction Y, and the Z-axis direction may be referred to as an orthogonal direction Z. One direction in the longitudinal direction X is referred to as a +X direction or a rightward direction. A direction opposite to the +X direction is referred to as the -X direction or a leftward direction. A direction from the twelfth fiber 212 toward the first fiber 201 in the disposition direction Y is referred to as a +Y direction or an upward direction. A direction opposite to the +Y direction is referred to as a -Y direction or a downward direction.
As illustrated in FIG. 2, each optical fiber 20 includes a waveguide 21 and a coating part 22. The waveguide 21 is formed of, for example, glass. The waveguide 21 (glass part) includes a core 21a and a cladding 21b. The cladding 21b covers the core 21a. The coating part 22 is formed of a resin or the like and covers the glass part 21. As a specific material for the coating part 22, for example, a UV curable resin may be used. The coating part 22 according to the present embodiment includes a primary layer 22a and a secondary layer 22b. The primary layer 22a covers the glass part 21 (cladding 21b). The secondary layer 22b covers the primary layer 22a.
As illustrated in FIG. 1, each optical fiber 20 extends in the longitudinal direction X. The plurality of optical fibers 20 are disposed in the disposition direction Y. A pitch P1 at which the plurality of optical fibers 20 are disposed in the disposition direction Y is larger than a diameter (fiber diameter) R of each optical fiber 20. In other words, a gap G is provided between two optical fibers 20 adjacent in the disposition direction Y.
The plurality of optical fibers 20 include a pair of outermost fibers positioned at outermost sides in the disposition direction Y, and a plurality of intermediate fibers. The plurality of intermediate fibers are positioned between the pair of outermost fibers in the disposition direction Y. In the example of FIG. 1, the first fiber 201 and the twelfth fiber 212 correspond to the outermost fibers, and the second fiber 202 to the eleventh fiber 211 correspond to the intermediate fibers.
The plurality of connection parts 10 are each formed in the gap G. The plurality of connection parts 10 are disposed intermittently in the longitudinal direction X and the disposition direction Y. Note that, in the present specification, the phrase "intermittently disposed" includes both cases in which intervals between the plurality of connection parts 10 are constant and intervals between the connection parts 10 are not constant. Each connection part 10 connects two optical fibers 20 adjacent to the gap G at which the connection part 10 is disposed. More specifically, each connection part 10 connects the coating parts 22 of two optical fibers 20 adjacent to the gap G at which the connection part 10 is disposed. That is, in the optical fiber ribbon 1A according to the present embodiment, two optical fibers 20 adjacent in the disposition direction Y are intermittently connected to each other in the longitudinal direction X by the plurality of connection parts 10. The optical fiber ribbon 1A is also referred to as an intermittently-fixed optical fiber ribbon 1A. As the connection part 10, any material capable of connecting coating parts 22 of adjacent optical fibers 20 may be used. For example, a UV curable resin may be used as the connection part 10. In the present embodiment, dimensions of the plurality of connection parts 10 in the longitudinal direction X and the disposition direction Y are substantially equal to each other.

Also, the plurality of connection parts 10 include a plurality of outermost connection parts 10a that are in contact with either the pair of outermost fibers 201 and 212, and a plurality of intermediate connection parts 10b that connect intermediate fibers 202 to 211. In the example of FIG. 1, each outermost connection part 10a connects the first fiber 201 and the second fiber 202, or the eleventh fiber 211 and the twelfth fiber 212. Each intermediate connection part 10b connects the second fiber 202 to the eleventh fiber 211.

The optical fiber ribbon 1A according to the present embodiment includes a plurality of high-density regions D and a plurality of low-density regions S. The plurality of high-density regions D and the plurality of low-density regions S are alternately disposed in the longitudinal direction X and are in contact with each other. In the present embodiment, the plurality of high-density regions D include a first high-density region D1 and a second high-density region D2. The first high-density region D1 and the second high-density region D2 are disposed at positions different from each other. Also, the first high-density region D1 and the second high-density region D2 are in contact with the same low-density region S. In other words, the first high-density region D1 and the second high-density region D2 are disposed to sandwich one low-density region S in the longitudinal direction X.

In the present embodiment, each high-density region D is formed in a substantially rectangular shape. Similarly, each low-density region S is formed in a substantially rectangular shape. In the present specification, each boundary line between the high-density region D and the low-density region S may be particularly referred to as a boundary B. In the present embodiment, each boundary B is a line segment parallel to the disposition direction Y. At least one connection part 10 (border connection part 10c) is in contact with each boundary B.

In the present specification, the connection part 10 positioned on a rightmost side among the plurality of connection parts 10 included in each high-density region D may be referred to as a right end connection part 10R. Similarly, the connection part 10 positioned on a leftmost side among the plurality of connection parts 10 included in each high-density region D may be referred to as a left end connection part 10L. In the example of FIG. 1, each high-density region D includes six right end connection parts 10R and six left end connection parts 10L.

In the present specification, a dimension LD in the longitudinal direction X is defined for each high-density region D as follows. That is, the dimension LD is a distance in the longitudinal direction X between a right end of the right end connection part 10R included in the high-density region D and a left end of the left end connection part 10L included in the high-density region D. In the example of FIG. 1, among the plurality of high-density regions D, the dimension in the longitudinal direction X is substantially constant as the dimension LD.

In the present specification, a dimension LS in the longitudinal direction X is defined for each low-density region S as follows. That is, the dimension LS is a distance in the longitudinal direction X between a right end of the right end connection part 10R included in the adjacent high-density region D positioned on a left side of the low-density region S and a left end of the left end connection part 10L included in the adjacent high-density region D positioned on a right side of the low-density region S. In the example of FIG. 1, among the plurality of low-density regions S, the dimension in the longitudinal direction X is substantially constant as the dimension LS. Note that, the dimension LD may not be constant between the plurality of high-density regions D, and the dimension LS also may not be constant between the plurality of low-density regions S.

Hereinafter, a configuration of each of the high-density regions D and a configuration of each of the low-density regions S will be described.

Of the plurality of connection parts 10, at least two connection parts 10 having different positions from each other in the longitudinal direction X and disposition direction Y are disposed in each high-density region D. In the example of FIG. 1, twenty eight connection parts 10 are disposed in each high-density region D. In the example of FIG. 1, a disposition pattern of the twenty eight connection parts 10 included in each high-density region D is substantially the same among the plurality of high-density regions D. Note that, the number of the connection parts 10 included in each high-density region D may be changed as appropriate, and the number of the connection parts 10 is not limited as long as it is two or more.

Hereinafter, in the present specification, the connection part 10 positioned at the boundary B between the high-density region D and the low-density region S will be referred to as a boundary connection part 10c, and the connection part 10 separated from the boundary B will be referred to as a non-boundary connection part 10d. In the present embodiment, each high-density region D includes a plurality of boundary connection parts 10c and non-boundary connection parts 10d. For example, the first high-density region D1 includes a plurality of first boundary connection parts 10c 1, and the second high-density region D2 includes a plurality of second boundary connection parts 10c2. Here, the plurality of first boundary connection parts 10c1 and the plurality of second boundary connection parts 10c2 are in contact with the same low-density region S.

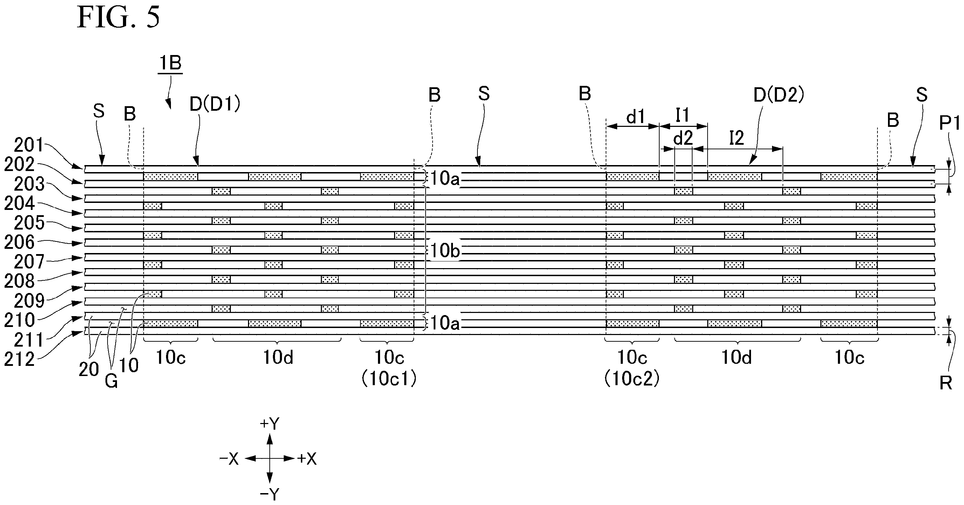

The right end connection parts 10R and left end connection parts 10L, which are previously defined, are included in the plurality of boundary connection parts 10c. In other words, all of the right end connection parts 10R and left end connection parts 10L are the boundary connection parts 10c. Particularly, in the example of FIG. 1, all the boundary connection parts 10c correspond to either the right end connection parts 10R or the left end connection parts 10L. In other words, the boundary connection parts 10c are not offset from each other in the longitudinal direction X. However, the high-density region D may include the boundary connection part 10c that does not correspond to either the right end connection part 10R or the left end connection part 10L. In other words, the boundary connection parts 10c may be offset from each other in the longitudinal direction X (see also FIG. 5).

The plurality of boundary connection parts 10c overlap each other in the disposition direction Y. More specifically, in each high-density region D, all the plurality of boundary connection parts 10c in contact with the same low-density region S overlap each other in the disposition direction Y. For example, as illustrated in FIG. 1, all the plurality of first boundary connection parts 10c1 overlap each other in the disposition direction Y. In other words, each high-density region D has a rectangular region in which the plurality of boundary connection parts 10c overlap each other in the disposition direction Y. In the present specification, this region is referred to as a "boundary region BA". As illustrated in FIG. 1, all the plurality of first boundary connection parts 10c1 are included in the same boundary region BA. A side of the boundary region BA facing a side opposite to a center of the high-density region D in the longitudinal direction X is positioned on the boundary B. In other words, the boundary B extends along the side of the boundary region BA facing a side opposite to a center of the high-density region D in the longitudinal direction X.

In the example of FIG. 1, each high-density region D has a first column C1 to a fifth column C5. The first column C1 to the fifth column C5 are disposed in this order in a direction from the left side to the right side. Also, a pitch P2 at which the columns C1 to C5 are arranged is substantially constant. The columns C1 to C5 are each parallel to the disposition direction Y. The first column C1 and the fifth column C5 each include six boundary connection parts 10c. For example, the fifth column C5 of the first high-density region D1 includes six first boundary connection parts 10c1. The first column C1 of the second high-density region D2 includes six second boundary connection parts 10c2. The second column C2 and the fourth column C4 each include five non-boundary connection parts 10d. The third column C3 includes six non-boundary connection parts 10d.

Here, the number of the first boundary connection parts 10c1 is equal to or more than the number of the non-boundary connection parts 10d overlapping in the disposition direction Y. In other words, the number of the non-boundary connection parts 10d overlapping in the disposition direction Y is equal to or less than the number of the first boundary connection parts 10c1. In the example of FIG. 1, the number of the first boundary connection parts 10c1 is six, the number of the non-boundary connection parts 10d included in each of the columns C2 and C4 of the high-density region D is five, and the number of the non-boundary connection parts 10d included in the third column C3 is six. Therefore, the number of the non-boundary connection parts 10d included in each of the columns C2 to C4 of the high-density region D is six or less. In other words, of the columns C1 to C5, columns having a largest number of connection parts 10 are the first column C1 and the fifth column C5.

Also, in each high-density region D, all the plurality of optical fibers 20 are in contact with any one of the plurality of boundary connection parts 10c. In other words, all the plurality of optical fibers 20 are in contact with any one of the plurality of connection parts 10 included in the first column C1 or the fifth column C5. For example, in the first high-density region D1, all the plurality of optical fibers 20 are in contact with any one of the plurality of first boundary connection parts 10c1. In the second high-density region D2, all the plurality of optical fibers 20 are in contact with any one of the plurality of second boundary connection parts 10c2. Further, in each high-density region D, the gaps G at which the connection parts 10 included in the first column C1, third column C3, and fifth column C5 are positioned, and the gaps G at which the connection parts 10 included in the second column C2 and fourth column C4 are positioned are offset in the disposition direction Y. Thereby, all the plurality of optical fibers 20 are connected to each other by the connection parts 10 in each high-density region D.

Also, a disposition pattern of the plurality of boundary connection parts 10c in contact with a left side of the low-density region S is the same as a disposition pattern of the plurality of boundary connection parts 10c in contact with a right side of the low-density region S. In other words, the plurality of boundary connection parts 10c in contact with a certain low-density region S are disposed to be symmetrical with respect to the low-density region S. For example, a disposition pattern of the plurality of second boundary connection parts 10c2 is the same as a disposition pattern of the plurality of first boundary connection parts 10c1. Note that, the phrase "disposition pattern of the plurality of first boundary connection parts 10c1" means respective positions of the first boundary connection parts 10c1 in the disposition direction Y. The phrase "disposition pattern of the plurality of second boundary connection parts 10c2" means respective positions of the second boundary connection parts 10c2 in the disposition direction Y.

Also, in each high-density region D, at least one boundary connection part 10c among the plurality of boundary connection parts 10c connects the outermost fibers 201 and 212 to the intermediate fibers 202 and 211. In other words, at least one outermost connection part 10a is included in the plurality of boundary connection parts 10c. In the example of FIG. 1, each high-density region D includes the boundary connection part 10c connecting the first fiber 201 and the second fiber 202, and the boundary connection part 10c connecting the eleventh fiber 211 and the twelfth fiber 212. In yet other words, each high-density region D includes the boundary connection part 10c in contact with the first fiber 201 and the boundary connection part 10c in contact with the twelfth fiber 212. Note that, the number of the boundary connection parts 10c connecting the outermost fibers 201 and 212 to the intermediate fibers 202 and 211 may be one or less.

A number density of the connection parts 10 in each low-density region S is lower than a number density of the connection parts 10 in each high-density region D. Note that, the "number density of the connection parts 10 in the low-density region S" refers to a value obtained by dividing the number of the connection parts 10 included in the low-density region S by an area of the low-density region S. The "number density of the connection parts 10 in the high-density region D" refers to a value obtained by dividing the number of connection parts 10 included in the high-density region D by an area of the high-density region D. In the example of FIG. 1, each low-density region S does not include the connection part 10. That is, the number density of the connection parts 10 in the low-density region S is zero. However, the connection part 10 may be included in the low-density region S.

Incidentally, generally, in a case in which an optical fiber ribbon is made into a cable or the like, a compressive stress may be applied to the optical fiber ribbon in the longitudinal direction. Here, if the optical fiber ribbon has a low-density region with a small number of the connection parts, there is a likelihood that the optical fibers will bend in the low-density region due to the compressive stress described above, thereby causing sharp bending (so-called kink). Occurrence of such a kink may lead to an increase in transmission loss of light propagating through the optical fiber. Also, there is a likelihood that a force of twisting the optical fiber ribbon around a rotation axis parallel to the longitudinal direction will be applied to the optical fiber ribbon. When the optical fiber ribbon is twisted, there is a likelihood that a slight bend (so-called micro-bend) will occur in the optical fibers in the low-density region, leading to an increase in transmission loss.

In response to these problems, the optical fiber ribbon 1A according to the present embodiment is configured such that a maximum value of an amount of increase in transmission loss that occurs in light with a wavelength of 1550 nm propagating through the optical fiber 20 in a kink test (details will be described later) is 1 dB or less. Also, the optical fiber ribbon 1A according to the present embodiment is configured such that an amount of increase in transmission loss that occurs in light with a wavelength of 1550 nm propagating through the optical fiber 20 in a twist test (details will be described later) is 1 dB or less. Hereinafter, using a specific test example, a specific configuration in which the maximum value of the amount of increase in transmission loss in the kink test is made to be 1 dB or less, and the amount of increase in transmission loss in the twist test is made to be 1 dB or less will be described. However, the optical fiber ribbon 1A may not be configured such that the amount of increase in transmission loss in the twist test is 1 dB or less.


(Test example 1: kink test)

A plurality of optical fiber ribbons in which a Young's modulus of the primary layer 22a and the dimension LS of the low-density region S in the longitudinal direction X were different from each other were prepared. Then, a kink test was conducted on each of the optical fiber ribbons. Note that, the Young's modulus of the secondary layer 22b and the dimension LD of the high-density region D in the longitudinal direction X were regarded as being the same between the plurality of prepared optical fiber ribbons. Specifically, the Young's modulus of the secondary layer 22b was regarded as being the same with a value of 900 MPa or more, and the dimension LD of the high-density region D was regarded as being the same at 4.5 cm.

Here, the "kink test" is a test of examining an amount of increase in transmission loss that occurs in light with a wavelength of 1550 nm propagating through the optical fiber 20 when an end edge (boundary B) of the low-density region S on a side opposite to the first high-density region D1 is brought closer to the first high-density region D1 in the longitudinal direction X in a state in which the first high-density region D1 is fixed and a tension of 100 gf is applied to the entire optical fiber ribbon.

Specifically, in the present test example, the kink test was conducted using the following procedure.

First, each of the plurality of optical fibers 20 constituting the optical fiber ribbon was caused to extend linearly in the longitudinal direction X, and the plurality of optical fibers 20 were caused to be disposed in the disposition direction Y. That is, the optical fiber ribbon was laid out flat so that the optical fiber ribbon was not curled or twisted. In this state, the first high-density region D1 was fixed to a first fixture (not illustrated), and the second high-density region D2 was fixed to a second fixture (not illustrated). Thereby, a situation in which the boundary B between the first high-density region D1 and the low-density region S could not move relative to the first fixture, and the boundary B between the second high-density region D2 and the low-density region S could not move relative to the second fixture was realized. Then, a load (tension) of 100 gf was applied to the entire optical fiber ribbon (including the low-density region S positioned between the two fixtures) in the longitudinal direction X. This state was defined as an initial state.

Next, the second fixture was brought closer to the first fixture in the longitudinal direction X by a predetermined distance. Then, an amount of increase in transmission loss that occurs in light with a wavelength of 1550 nm propagating through the optical fiber 20 was measured by power meters connected to both ends of the optical fiber ribbon. In other words, the amount of increase in transmission loss that occurs in light with a wavelength of 1550 nm was measured by comparing a state in which the second fixture was brought close to the first fixture by a predetermined distance and the initial state in which the second fixture was not brought close to the first fixture.

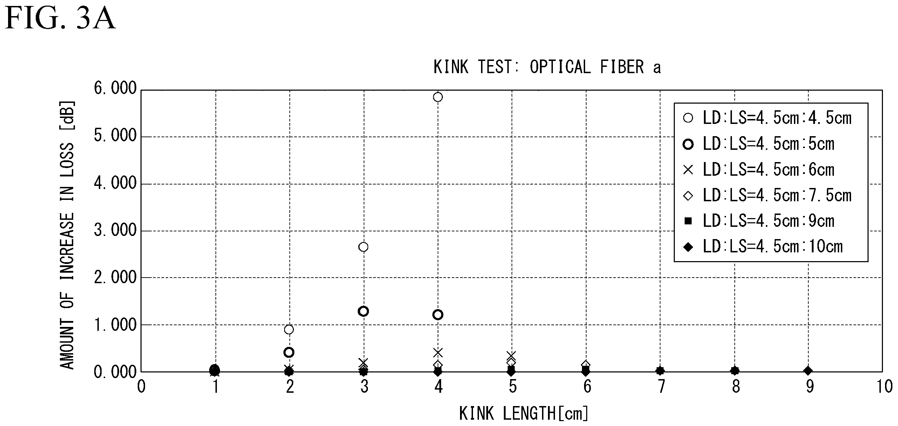

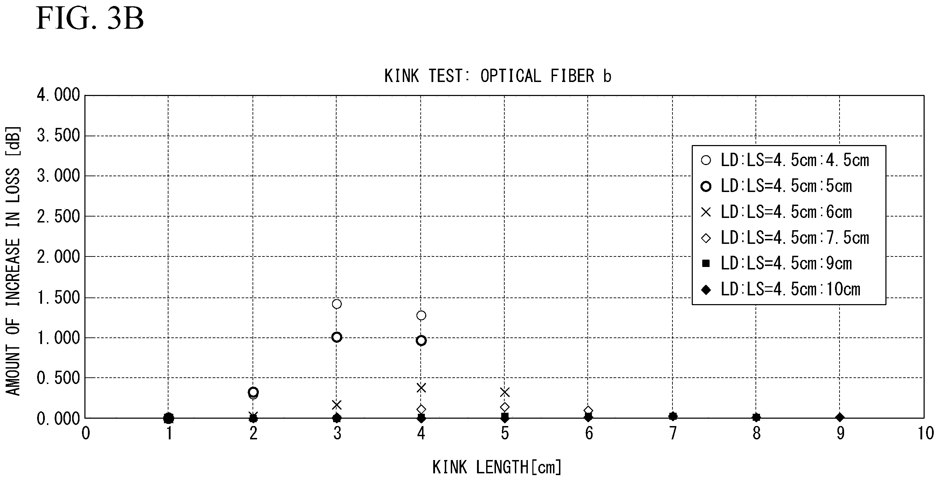

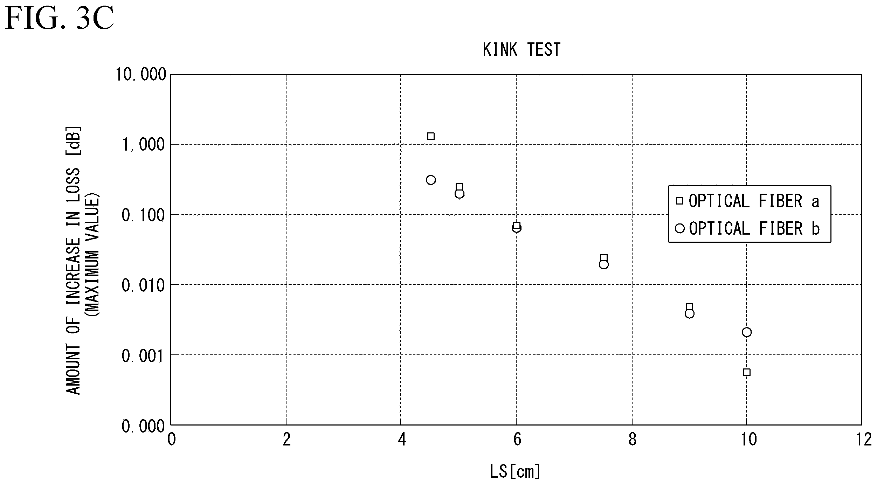

FIG. 3A is a graph summarizing results of the kink test on an optical fiber ribbon using an optical fiber a whose primary layer 22a has a Young's modulus of 0.5 MPa or more. Note that, a "kink length" means a distance by which the second fixture is brought closer to the first fixture (a movement distance from the initial state). FIG. 3B is a graph summarizing results of the kink test on an optical fiber ribbon using an optical fiber b whose primary layer 22a has a Young's modulus of less than 0.5 MPa. Tables 1 and 2 are tables in which plot points shown in FIGS. 3A and 3B are summarized. FIG. 3C is a graph summarizing a maximum value of an amount of increase in transmission loss in each of the optical fiber ribbons. Note that, FIG. 3C is a semi-log graph.

[Table 1]

| | Kink length [cm] | Amount of increase in loss of optical fiber a [dB] | Amount of increase in loss of optical fiber b [dB] |
|---|---|---|---|
| LD:LS = 4.5 cm:4.5 cm | 1 cm | 0.044 | 0.007 |
| | 2 cm | 0.890 | 0.299 |
| | 3 cm | 2.663 | 1.429 |
| | 4 cm | 5.862 | 1.275 |
| | Open | 0.000 | 0.001 |
| LD:LS = 4.5 cm:5 cm | 1 cm | 0.01 | 0.007 |
| | 2 cm | 0.406 | 0.324 |
| | 3 cm | 1.287 | 1.005 |
| | 4 cm | 1.205 | 0.965 |
| | Open | 0 | 0 |
| LD:LS = 4.5 cm:6 cm | 1 cm | 0.001 | 0.001 |
| | 2 cm | 0.032 | 0.026 |
| | 3 cm | 0.187 | 0.171 |
| | 4 cm | 0.415 | 0.385 |
| | 5 cm | 0.336 | 0.327 |
| | Open | 0.000 | 0.001 |
| LD:LS = 4.5 cm:7.5 cm | 1 cm | 0 | 0 |
| | 2 cm | 0.003 | 0.001 |
| | 3 cm | 0.028 | 0.021 |
| | 4 cm | 0.147 | 0.11 |
| | 5 cm | 0.187 | 0.145 |
| | 6 cm | 0.134 | 0.098 |
| | Open | 0 | 0 |

[Table 2]

| | Kink length [cm] | Amount of increase in loss of optical fiber a [dB] | Amount of increase in loss of optical fiber b [dB] |
|---|---|---|---|
| LD:LS = 4.5 cm:9 cm | 1 cm | 0 | 0 |
| | 2 cm | 0 | 0 |
| | 3 cm | 0 | 0.002 |
| | 4 cm | 0.01 | 0.01 |
| | 5 cm | 0.036 | 0.033 |
| | 6 cm | 0.043 | 0.035 |
| | 7 cm | 0.027 | 0.029 |
| | 8 cm | 0.023 | 0.017 |
| | Open | 0 | 0 |
| LD:LS = 4.5 cm:10 cm | 1 cm | 0.001 | 0.001 |
| | 2 cm | 0.000 | 0.001 |
| | 3 cm | 0.001 | 0.002 |
| | 4 cm | 0.002 | 0.003 |
| | 5 cm | 0.003 | 0.007 |
| | 6 cm | 0.003 | 0.020 |
| | 7 cm | 0.003 | 0.022 |
| | 8 cm | 0.003 | 0.018 |
| | 9 cm | 0.006 | 0.012 |
| | Open | 0.000 | 0.000 |

As shown in FIG. 3C, in both the optical fiber ribbon using the optical fiber a and the optical fiber ribbon using the optical fiber b, a maximum value of the amount of increase in transmission loss decreases as the dimension LS of the low-density region S in the longitudinal direction X becomes larger. This is considered to be because the optical fiber 20 is more likely to be deformed to alleviate its own bending and sharp bending (kink) is less likely to occur as the dimension LS of the low-density region S becomes larger.

Therefore, when the dimension LS of the low-density region S is set to be large to a certain extent, it is possible to realize an optical fiber ribbon in which an increase in transmission loss due to the kink is reduced. More specifically, when the dimension LS of the low-density region S in the longitudinal direction X is set to 5.0 cm or more, it is possible to make a maximum value of the amount of increase in transmission loss in the kink test 1 dB or less, regardless of the Young's modulus of the primary layer 22a. Also, when the dimension LS of the low-density region S in the longitudinal direction X is set to 6.0 cm or more, it is possible to make a maximum value of the amount of increase in transmission loss in the kink test 0.1 dB or less, regardless of the Young's modulus of the primary layer 22a.

(Test Example 2: Twist test)

A plurality of optical fiber ribbons were prepared under the same conditions as test example 1. Then, a twist test was conducted on each of the optical fiber ribbons.

Here, the "twist test" is a test of examining an amount of increase in transmission loss that occurs in light with a wavelength of 1550 nm propagating through the optical fiber 20 when an end edge (boundary B) of the low-density region S on a side opposite to the first high-density region D1 is caused to rotate around a rotation axis parallel to the longitudinal direction X in a state in which the first high-density region D1 is fixed and a tension of 100 gf is applied to the entire optical fiber ribbon.

Specifically, in the present test example, a twist test was conducted using the following procedure.

First, each of the plurality of optical fibers 20 constituting the optical fiber ribbon was caused to each extend linearly in the longitudinal direction X, and these plurality of optical fibers 20 were caused to be disposed in the disposition direction Y. That is, the optical fiber ribbon was laid out flat so that the optical fiber ribbon was not curled or twisted. In this state, the first high-density region D1 was fixed to a first fixture (not illustrated), and the second high-density region D2 was fixed to a second fixture (not illustrated). Thereby, a situation in which the boundary B between the first high-density region D1 and the low-density region S could not move relative to the first fixture, and the boundary B between the second high-density region D2 and the low-density region S could not move relative to the second fixture was realized. Then, a load (tension) of 100 gf was applied to the entire optical fiber ribbon (including the low-density region S positioned between the two fixtures) in the longitudinal direction X. This state was defined as an initial state.

Next, the second fixture was rotated by a predetermined angle around the rotation axis parallel to the longitudinal direction X with respect to the first fixture. Then, an amount of increase in transmission loss occurring in light with a wavelength of 1550 nm propagating through the optical fiber 20 was measured by power meters connected to both ends of the optical fiber ribbon. In other words, an amount of increase in transmission loss occurring in the light with a wavelength of 1550 nm was measured by comparing a state in which the second fixture was rotated by a predetermined angle with respect to the first fixture and the initial state in which the second fixture was not rotated with respect to the first fixture.

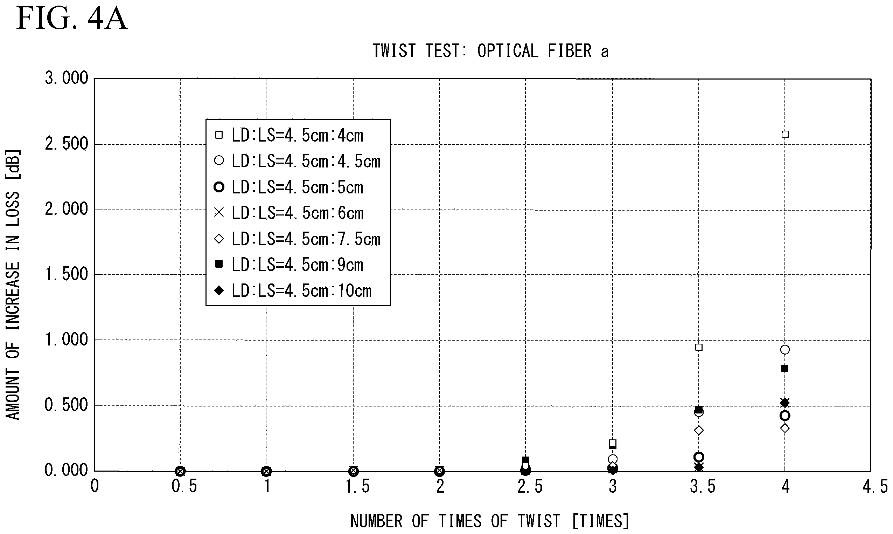

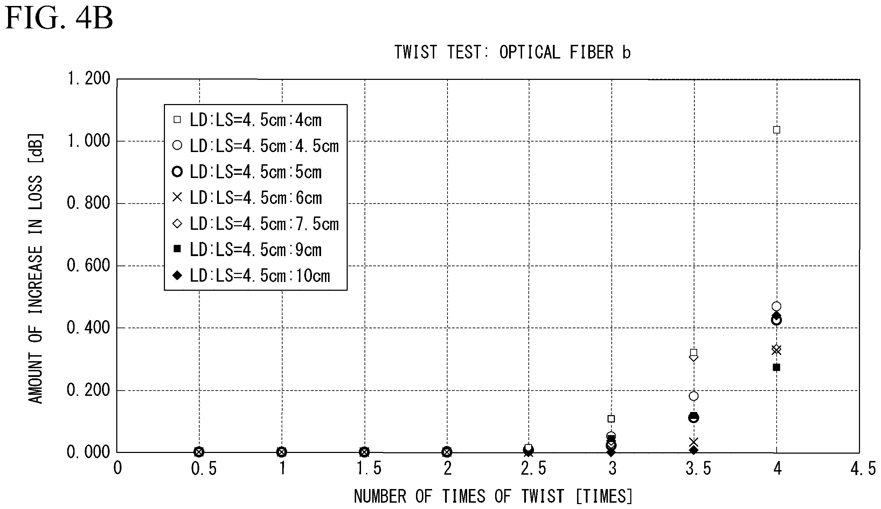

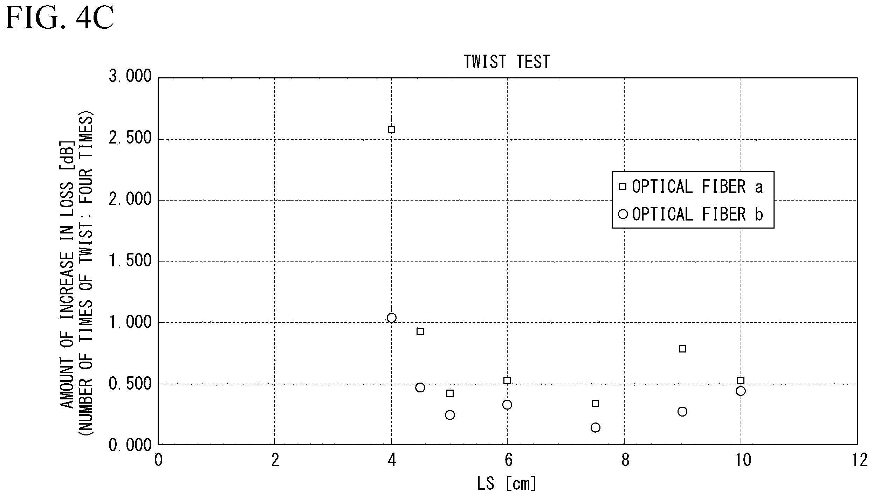

FIG. 4A is a graph summarizing results of the twist tests on the optical fiber ribbon using the optical fiber a whose primary layer 22a has a Young's modulus of 0.5 MPa or more. Note that, the "number of twists" is a parameter corresponding to the rotation angle of the second fixture. That is, the number of times of twist when the second fixture is rotated by 180° is 0.5 times, and the number of times of twist when the second fixture is rotated by 360° is one times. FIG. 4B is a graph summarizing results of the twist tests on the optical fiber ribbon using the optical fiber b whose primary layer 22a has a Young's modulus of less than 0.5 MPa. Tables 1 and 2 are tables in which plot points shown in FIGS. 4A and 4B are summarized. FIG. 4C is a graph summarizing an amount of increase in transmission loss when the number of times of twist is four times for each of the optical fiber ribbons.

[Table 3]

| | Number of times of twist [times] | Amount of increase in loss of optical fiber a [dB] | Amount of increase in loss of optical fiber b [dB] |
|---|---|---|---|
| LD:LS = 4.5 cm: 4 cm | 0.5 | 0.000 | 0.000 |
| | 1 | 0.000 | 0.001 |
| | 1.5 | 0.001 | 0.001 |
| | 2 | 0.008 | 0.003 |
| | 2.5 | 0.045 | 0.015 |
| | 3 | 0.214 | 0.109 |
| | 3.5 | 0.950 | 0.324 |
| | 4 | 2.580 | 1.036 |
| | Open | 0.000 | 0.000 |
| LD:LS = 4.5 cm: 4.5 cm | 0.5 | 0.000 | 0.001 |
| | 1 | 0.000 | 0.001 |
| | 1.5 | 0.001 | 0.002 |
| | 2 | 0.006 | 0.004 |
| | 2.5 | 0.019 | 0.012 |
| | 3 | 0.091 | 0.052 |
| | 3.5 | 0.456 | 0.183 |
| | 4 | 0.927 | 0.471 |
| | Open | 0.000 | 0.000 |

(continued)

|  | Number of times of twist [times] | Amount of increase in loss of optical fiber a [dB] | Amount of increase in loss of optical fiber b [dB] |
|---|---|---|---|
| LD:LS = 4.5 cm: 5 cm | 0.5 | 0.000 | 0.000 |
|  | 1 | 0.000 | 0.000 |
|  | 1.5 | 0.000 | 0.000 |
|  | 2 | 0.000 | 0.001 |
|  | 2.5 | 0.007 | 0.004 |
|  | 3 | 0.025 | 0.016 |
|  | 3.5 | 0.114 | 0.067 |
|  | 4 | 0.426 | 0.247 |
|  | Open | 0.001 | 0.001 |
| LD:LS = 4.5 cm: 6 cm | 0.5 | 0.000 | 0.000 |
|  | 1 | 0.000 | 0.000 |
|  | 1.5 | 0.001 | 0.001 |
|  | 2 | 0.002 | 0.001 |
|  | 2.5 | 0.005 | 0.003 |
|  | 3 | 0.015 | 0.012 |
|  | 3.5 | 0.034 | 0.033 |
|  | 4 | 0.529 | 0.330 |
|  | Open | 0.000 | 0.000 |

[Table 4]

|  | Number of times of twist [times] | Amount of increase in loss of optical fiber a [dB] | Amount of increase in loss of optical fiber b [dB] |
|---|---|---|---|
| LD:LS = 4.5 cm: 7.5 cm | 0.5 | 0.000 | 0.001 |
|  | 1 | 0.001 | 0.001 |
|  | 1.5 | 0.001 | 0.001 |
|  | 2 | 0.000 | 0.000 |
|  | 2.5 | 0.013 | 0.001 |
|  | 3 | 0.040 | 0.007 |
|  | 3.5 | 0.310 | 0.032 |
|  | 4 | 0.334 | 0.140 |
|  | Open | 0.000 | 0.000 |

(continued)

| | Number of times of twist [times] | Amount of increase in loss of optical fiber a [dB] | Amount of increase in loss of optical fiber b [dB] |
|---|---|---|---|
| LD:LS = 4.5 cm: 9 cm | 0.5 | 0.000 | 0.000 |
| | 1 | 0.000 | 0.000 |
| | 1.5 | 0.002 | 0.000 |
| | 2 | 0.010 | 0.003 |
| | 2.5 | 0.084 | 0.014 |
| | 3 | 0.198 | 0.044 |
| | 3.5 | 0.474 | 0.119 |
| | 4 | 0.791 | 0.274 |
| | Open | 0.003 | 0.004 |
| LD:LS = 4.5 cm: 10 cm | 0.5 | 0.001 | 0.001 |
| | 1 | 0.001 | 0.000 |
| | 1.5 | 0.002 | 0.001 |
| | 2 | 0.001 | 0.002 |
| | 2.5 | 0.001 | 0.003 |
| | 3 | 0.004 | 0.002 |
| | 3.5 | 0.034 | 0.010 |
| | 4 | 0.524 | 0.442 |
| | Open | 0.000 | 0.000 |

As illustrated in FIG. 4C, in both the optical fiber ribbon using the optical fiber a and the optical fiber ribbon using the optical fiber b, it is ascertained that the amount of increase in transmission loss tends to decreases as the dimension LS of the low-density region S in the longitudinal direction X becomes larger. This is considered to be because a twist angle per unit length of the optical fiber 20 decreases as the dimension LS becomes larger, and thereby a slight bend (micro-bend) is less likely to occur in the optical fiber 20. In the present test example, measurement of the transmission loss has been conducted only up to a case in which LS = 10 cm, but it is expected that a similar tendency will be observed in a region in which LS > 10 cm.

Therefore, when the dimension LS of the low-density region S is set to be large to a certain extent, it is possible to realize an optical fiber ribbon in which an increase in transmission loss due to the twist is reduced. Particularly, when the dimension LS of the low-density region S in the longitudinal direction X is set to 5.0 cm or more, it is possible to make a maximum value of the amount of increase in transmission loss in the kink test 1 dB or less and it is also possible to make the amount of increase in transmission loss in the twist test 1 dB or less, regardless of the Young's modulus of the primary layer 22a.

Next, other functions of the optical fiber ribbon 1A will be described.

The optical fiber ribbon 1A according to the present embodiment includes the plurality of high-density regions D in which a large number of connection parts 10 are disposed, and the plurality of low-density regions S in which the number of disposed connection parts 10 is small (particularly in the example of FIG. 1, no connection part 10 is disposed). Here, the plurality of optical fibers 20 are connected to each other and are integrated in each of the high-density regions D. Also, the connection parts 10 also have a role of fixing the pitch P1 at which two adjacent optical fibers 20 are disposed. Therefore, it is possible to stabilize the pitch P1 of the optical fibers 20 in each of the high-density regions D.

Incidentally, generally, a fusion splicer is used when an optical fiber ribbon is fusion-spliced to another optical fiber ribbon. The fusion splicer includes a holder for positioning the optical fiber ribbon. A plurality of grooves extending in the longitudinal direction X are formed in the holder. Inside the fusion splicer, the plurality of optical fibers 20 included in the optical fiber ribbon are each inserted through each of the plurality of grooves described above for positioning. Here, since the pitch P1 is fixed by the connection part 10, when a fusion work is performed on a certain optical fiber ribbon, conventionally, a fusion splicer having grooves disposed at the pitch P1 of optical fibers of the optical fiber ribbon has been used.

Incidentally, in recent years, research and development has been actively conducted to reduce a diameter of the optical fiber 20, and accordingly, the pitch P1 of the optical fibers 20 has also been reduced. Therefore, in a case of trying to fusion-splice two optical fiber ribbons manufactured at different times, since the pitches P1 of the two optical fiber ribbons are different from each other, there has been a problem that it is difficult to fusion-splice the two optical fiber ribbons using a fusion splicer.

On the other hand, the optical fiber ribbon 1A according to the present embodiment has the plurality of low-density regions S. In each of the low-density regions S, the connection part 10 for fixing the pitch P1 at which the optical fibers 20 are disposed is not disposed or is few. Therefore, it is possible for a user of the optical fiber ribbon 1A to extend the pitch P1 by pulling the optical fiber ribbon 1A in the disposition direction Y in the low-density region S. Also, the gap G is provided between two adjacent optical fibers 20 in the disposition direction Y. Therefore, it is possible for the user to reduce the pitch P1 by compressing the optical fiber ribbon 1A in the disposition direction Y in the low-density region S. Therefore, when the user changes the pitch P1 in the low-density region S and sets the low-density region S with the changed pitch P1 in a fusion splicer, it is possible to use the fusion splicer having the pitch P1 different from that of the optical fiber ribbon 1A. Also, it is possible to fusion-splice the optical fiber ribbon 1A to an optical fiber ribbon having the pitch P1 different from that of the optical fiber ribbon 1A.

As described above, the optical fiber ribbon 1A according to the present embodiment includes the plurality of optical fibers 20 disposed in the disposition direction Y perpendicular to the longitudinal direction X, and the plurality of connection parts 10 formed between two optical fibers 20 adjacent in the disposition direction Y to connect the two optical fibers 20, in which the plurality of connection parts 10 are disposed intermittently in the longitudinal direction X and the disposition direction Y, the optical fiber ribbon 1A has the first high-density region D1 and the low-density region S adjacent in the longitudinal direction X, at least two connection parts 10 having different positions from each other in the longitudinal direction X and disposition direction Y among the plurality of connection parts 10 are disposed in the first high-density region D1, a number density of the connection parts 10 in the low-density region S is lower than a number density of the connection parts 10 in the first high-density region D1, and a maximum value of an amount of increase in transmission loss that occurs in light with a wavelength of 1550 nm propagating through the optical fiber 20 in a kink test is 1 dB or less. With this configuration, it is possible to realize an optical fiber ribbon in which an increase in transmission loss due to the kink is reduced.

Also, in a twist test in which the low-density region S is twisted four times, a maximum value of the amount of increase in transmission loss that occurs in light with a wavelength of 1550 nm propagating through the optical fiber 20 is 1 dB or less. With this configuration, it is possible to realize an optical fiber ribbon in which an increase in transmission loss due to the twist is reduced.

Also, when a dimension of the low-density region S in the longitudinal direction X is LS, $LS \geq 5.0$ cm is satisfied. With this configuration, it is possible to reduce increase in transmission loss due to the kink more reliably.

Also, the pitch P1 at which the plurality of optical fibers 20 are disposed in the disposition direction Y is larger than a diameter R of each of the plurality of optical fibers 20. With this configuration, when the optical fiber ribbon 1A is fusion-spliced, it is possible to use a fusion splicer having the pitch P1 different from that of the optical fiber ribbon 1A. Moreover, it is possible to fusion-splice the optical fiber ribbon 1A to an optical fiber ribbon having the pitch P1 different from that of the optical fiber ribbon 1A.

Generally, when the optical fiber ribbon 1A is set in the fusion splicer, compared to the intermediate fibers 202 to 211, the outermost fibers 201 and 212 are likely to be deviated in position or bent with respect to grooves of the fusion splicer. In contrast, in the optical fiber ribbon 1A according to the present embodiment, the plurality of optical fibers 20 include the pair of outermost fibers 201 and 212 positioned at outermost sides in the disposition direction Y and intermediate fibers 202 to 211 positioned between the pair of outermost fibers 201 and 212 in the disposition direction Y, the plurality of connection parts 10 include the first boundary connection part 10c 1 positioned at the boundary B between the first high-density region D1 and the low-density region S, and the first boundary connection part 10c1 connects the outermost fibers 201 and 212 to the intermediate fibers 202 and 211. According to this configuration, it is possible to make the outermost fibers 201 and 212 difficult to move at the boundary B between the high-density region D and the low-density region S. Therefore, when the optical fiber ribbon 1A is set in a groove of the fusion splicer, it is possible to reduce occurrence of positional deviation or bending of the outermost fibers 201 and 212 with respect to the groove.

Also, the plurality of connection parts 10 include the plurality of first boundary connection parts 10c1 positioned at the boundary B between the first high-density region D1 and the low-density region S and overlapping each other in the disposition direction Y, and all the plurality of optical fibers 20 are in contact with any one of the plurality of first boundary connection parts 10c1. Thereby, it is possible to make all the optical fibers 20 difficult to move at the boundary B between the high-density region D and the low-density region S. Therefore, it is possible to make work of setting the optical fiber ribbon 1A in the fusion splicer easier.

Also, the number of the first boundary connection parts 10c1 is equal to or more than the number of the non-boundary connection parts 10d overlapping in the disposition direction Y. Thereby, it is possible to enhance a rigidity of the optical fiber ribbon 1A at the boundary B between the high-density region D and the low-density region S. Therefore, it is possible to make the work of setting the optical fiber ribbon 1A in the fusion splicer easier.

Also, the second high-density region D2 disposed at a different position from the first high-density region D1 in the longitudinal direction X and disposed to be in contact with the low-density region S in the longitudinal direction X is further included, at least two connection parts 10 having different positions from each other in the longitudinal direction X and disposition direction Y among the plurality of connection parts 10 are disposed in the second high-density region D2, a number density of the connection parts 10 in the second high-density region D2 is higher than a number density of the connection parts 10 in the low-density region S, the plurality of connection parts 10 include the plurality of first boundary connection parts 10c 1 positioned at the boundary B between the first high-density region D1 and the low-density region S and overlapping each other in the disposition direction Y, and the plurality of second boundary connection parts 10c2 positioned at the boundary B between the second high-density region D2 and the low-density region S and overlapping each other in the disposition direction Y, and a disposition pattern of the plurality of second boundary connection parts 10c2 is the same as a disposition pattern of the plurality of first boundary connection parts 10c1. Thereby, when the optical fiber ribbon 1A is set in the fusion splicer, movement of the optical fiber 20 at a left end of the low-density region S and movement of the optical fiber 20 at a right end of the low-density region S are likely to be interlocked. In other words, movement of the optical fiber 20 at a left end of the fusion splicer and movement of the optical fiber 20 at a right end of the fusion splicer are likely to be linked. Therefore, it is possible to make work of setting the optical fiber ribbon 1A in the fusion splicer easier.

Also, the difference in the number of connection parts 10 between the high-density region D and the low-density region S has an effect also on the distinguishability between the high-density region D and the low-density region S. Since the number of connection parts 10 is large in the high-density region D, it is possible to easily identify the high-density region D by scattering of external light. On the other hand, in the low-density region S, it is possible to expand the pitch P1 by pulling the optical fiber ribbon 1A in the disposition direction Y, and it is possible to easily identify the low-density region S. Also, it is possible to make the distinguishability between the high-density region D and the low-density region S even more effective by coloring or marking a resin of the connection part 10.

Incidentally, for example, when an external force (tearing force) directed outward in the disposition direction Y is applied to the optical fiber ribbon 1A, cracks may occur in the connection part 10, that is, the boundary connection part 10c and the non-boundary connection part 10d. Here, the above-described external force is distributed to the plurality of boundary connection parts 10c and the plurality of non-boundary connection parts 10d. At this time, since the boundary connection parts 10c are adjacent to the low-density region S in which the number of the connection parts 10 is small, it is considered that the external force is more likely to concentrate on the boundary connection parts 10c compared to the non-boundary connection parts 10d. In other words, it is considered that the boundary connection parts 10c are more likely to cause cracks than the non-boundary connection parts 10d.

The inventors of the present application have considered that the external force is more likely to concentrate on the boundary connection part 10c as the dimension LS of the low-density region S becomes larger. More specifically, it has been considered that a magnitude of the external force concentrated on the boundary connection part 10c is proportional to the dimension LS. That is, it is considered that cracks are more likely to occur in the boundary connection part 10c as the dimension LS becomes larger. For example, when a strength of the boundary connection part 10c is 3.0 gf, it is considered necessary to set the dimension LS of the low-density region S to a certain upper limit value or less so that the magnitude of the external force concentrated on the boundary connection part 10c does not exceed 3.0 gf. Note that, the "strength of the connection part 10" is a maximum value of the external force that the connection part 10 is maintained without cracks when the external force is applied to the connection part 10.

The inventors of the present application conducted the following test to examine an upper limit value of the dimension LS that would prevent cracks from occurring in each connection part 10. That is, a test was conducted to determine whether or not cracks would occur in the connection part 10 (boundary connection part 10c) when a predetermined external force was applied to the optical fiber ribbon 1A in which the dimension LS of the low-density region S was about 30 mm. More specifically, a flexural test was conducted on the optical fiber ribbon 1A having 200 optical fibers 20 at a tension of 130 kgf, a mandrel diameter of 250 mm, and a bending angle of 90°, and observation was made to determine whether or not cracks occurred in the connection part 10.

As a result of the test, it was ascertained that, for the optical fiber ribbon 1A having the dimension LS of about 30 mm, cracks occurred in the boundary connection part 10c when a strength of each connection part 10c was less than 1.5 gf. On the other hand, it was ascertained that no cracks occurred in the non-boundary connection part 10d and the boundary connection part 10c when the strength of each connection part 10 was 1.5 gf or more. From these, it is considered that, in the test, a magnitude of the external force concentrated on the boundary connection part 10c has been about 1.5 gf. On the basis of the test result and the above-described consideration that a magnitude of the external force concentrated on the boundary connection part 10c is proportional to the dimension LS, it is thought that the following expression (1) is satisfied.

$$F \, [\text{gf}] = 1.5 \, [\text{gf}] \times LS \, [\text{mm}]/30 \, [\text{mm}] \cdots (1)$$

Here, F is a magnitude of the external force concentrated on the boundary connection part 10c under the condition that the dimension of the low-density region S is LS mm.

In view of the fact that the boundary connection part 10c is more likely to crack than the non-boundary connection part 10d and that there is variation in magnitude of the strength of the connection part 10, the inventors of the present application have considered that the following expression (2) is desirably satisfied to prevent cracks from occurring in the connection part 10.

$$F \, [\text{gf}] \le A \, [\text{gf}] - 3S \, [\text{gf}] \cdots (2)$$

Here, A is an average value of the strength (tear strength) of the connection part 10, and S is a standard deviation of the strength of the connection part 10.

When the above-described expressions (1) and (2) are combined to eliminate F, the following expression (3) is derived.

$$LS[\text{mm}] \le 30[\text{mm}] \times (A - 3S) \, [\text{gf}]/1.5 \, [\text{gf}] \cdots (3)$$

That is, when the upper limit value of the dimension LS of the low-density region S is determined by expression (3), it is possible to obtain the optical fiber ribbon 1A in which cracks are less likely to occur in the connection part 10 (boundary connection part 10c). However, the technical scope of the present invention is not limited to this, and the dimension LS may not satisfy expression (3).

Alternatively, an upper limit value for the dimension LS may be determined as follows. That is, the dimension LS may be 100 mm or less. A dimension of the fusion splicer in the longitudinal direction X is generally about 200 mm. Therefore, when a case in which two optical fiber ribbons 1A are fusion-spliced at the low-density regions S of them is considered, it is preferable that a sum of the dimensions LS of both the low-density regions S be 200 mm or less. This is because, if the sum of the two dimensions LS exceeds 200 mm, at least one of the low-density regions S will protrude outside the fusion splicer, and thereby work of setting the optical fiber ribbons 1A in the fusion splicer becomes complicated. In contrast, when the value of the dimension LS is set to 100 mm or less, it is possible to make the sum of the two dimensions LS to be 200 mm or less. Thereby, it is possible to make the work of setting the two optical fiber ribbons 1A in the fusion splicer easier.

Also, according to Japanese Unexamined Patent Application, First Publication No. 2013-182157, a strength of the connection part 10 is preferably within a range of 1.5 to 21.0 gf. If this is applied to the present embodiment, in consideration of the variation in the strength of the connection part 10, it is desirable that the following expression (4) be satisfied.

$$1.5 \, [\text{gf}] < A - 3S \, [\text{gf}] < A + 3S \, [\text{gf}] < 21.0 \, [\text{gf}] \cdots (4)$$

(Second embodiment)

Next, a second embodiment of the present invention will be described, but a basic configuration is the same as that of the first embodiment. Therefore, components which are the same are denoted by the same reference signs, description thereof will be omitted, and only different points will be described.

An optical fiber ribbon 1B according to the present embodiment illustrated in FIG. 5 differs from the optical fiber ribbon 1A according to the first embodiment in a dimension and positional relationship of each of the connection parts 10.

As illustrated in FIG. 5, in the present embodiment, in each high-density region D, a dimension (first dimension) d1 of each outermost connection part 10a in a longitudinal direction X is larger than a dimension (second dimension) d2 of each intermediate connection part 10b in the longitudinal direction X. Also, in each high-density region D, a disposition interval I1 (first disposition interval) of the outermost connection parts 10a in the longitudinal direction X is smaller than a disposition interval I2 (second disposition interval) of the intermediate connection parts 10b in the longitudinal direction X.

In this case, it is possible to more firmly connect outermost fibers 201 and 212 to intermediate fibers 202 and 211, compared to a case in which, for example, the dimension d1 and the dimension d2 are equal. Similarly, it is possible to more firmly connect the outermost fibers 201 and 212 to the intermediate fibers 202 and 211, compared to a case in which, for example, the disposition interval I1 and the disposition interval I2 are equal. Therefore, when the optical fiber ribbon 1B is set in a groove of a fusion splicer, it is possible to further reduce a likelihood of the outermost fibers 201 and 212 being deviated in position or bent with respect to the groove.

As described above, in the optical fiber ribbon 1B according to the present embodiment, the dimension d1 of the outermost connection part 10a in the longitudinal direction X is larger than the dimension d2 of the intermediate connection part 10b in the longitudinal direction X. With this configuration, when the optical fiber ribbon 1B is set in the groove of the fusion splicer, it is possible to further reduce a likelihood of the outermost fibers 201 and 212 being deviated in position or bent with respect to the groove.

Also, the disposition interval I1 of the outermost connection part 10a in the longitudinal direction X is smaller than the disposition interval I2 of the intermediate connection part 10b in the longitudinal direction X. With this configuration, when the optical fiber ribbon 1B is set in the groove of the fusion splicer, it is possible to reduce a likelihood of the outermost fibers 201 and 212 being deviated in position or bent with respect to the groove more reliably.

(Third embodiment)

Next, a third embodiment of the present invention will be described, but a basic configuration is the same as that of the first embodiment. Therefore, components which are the same are denoted by the same reference signs, description thereof will be omitted, and only different points will be described.

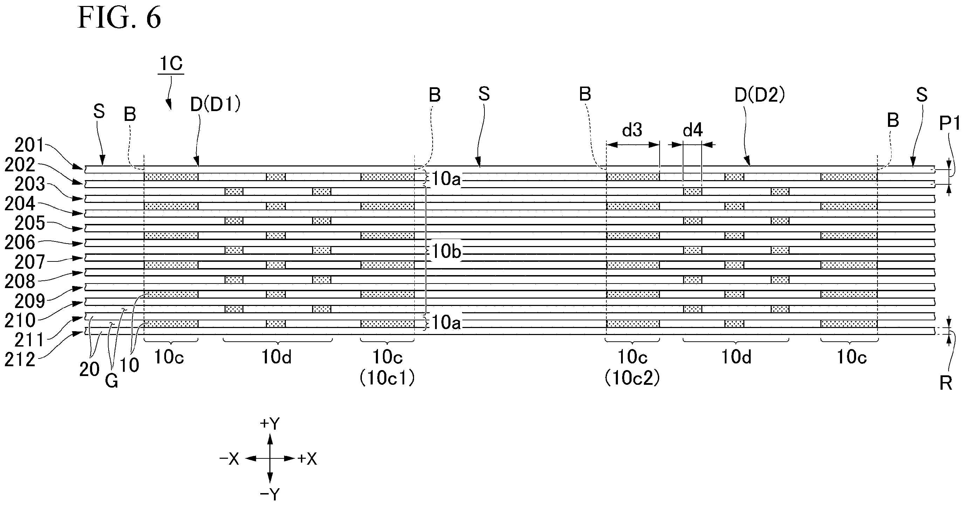

An optical fiber ribbon 1C according to the present embodiment illustrated in FIG. 6 differs from the optical fiber ribbon 1A according to the first embodiment in a dimension and positional relationship of each of the connection parts 10.

As illustrated in FIG. 6, in the present embodiment, in each high-density region D, a dimension (third dimension) d3 of each boundary connection part 10c in a longitudinal direction X is larger than a dimension (fourth dimension) d4 of each non-boundary connection part 10d in the longitudinal direction X. For example, in a first high-density region D1, the dimension d3 of a first boundary connection part 10c1 in the longitudinal direction X is larger than the dimension d4 of the non-boundary connection part 10d in the longitudinal direction X.

In this case, it is possible to enhance a rigidity of the optical fiber ribbon 1C at a boundary B between the high-density region D and a low-density region S, compared to a case in which, for example, the dimensions d3 and d4 are equal. Thereby, it is possible to make work of setting the optical fiber ribbons 1C in a fusion splicer easier.

As described above, in the optical fiber ribbon 1C according to the present embodiment, the dimension d3 of a first boundary connection part 10c1 in the longitudinal direction X is larger than the dimension d4 of the non-boundary connection part 10d in the longitudinal direction X. With this configuration, it is possible to make the work of setting the optical fiber ribbons 1C in the fusion splicer easier.

Note that, in the present specification, for example, "substantially equal" also includes a case in which it may be regarded as being equal if manufacturing errors are removed. The same applies to other expressions using "substantially". That is, expressions using "substantially" also include cases in which the meaning indicated by the words following "substantially" may be regarded as being established if manufacturing errors are removed.

Further, the technical scope of the present invention is not limited to the above-described embodiments, and various modifications may be made in a range not departing from the meaning of the present invention.

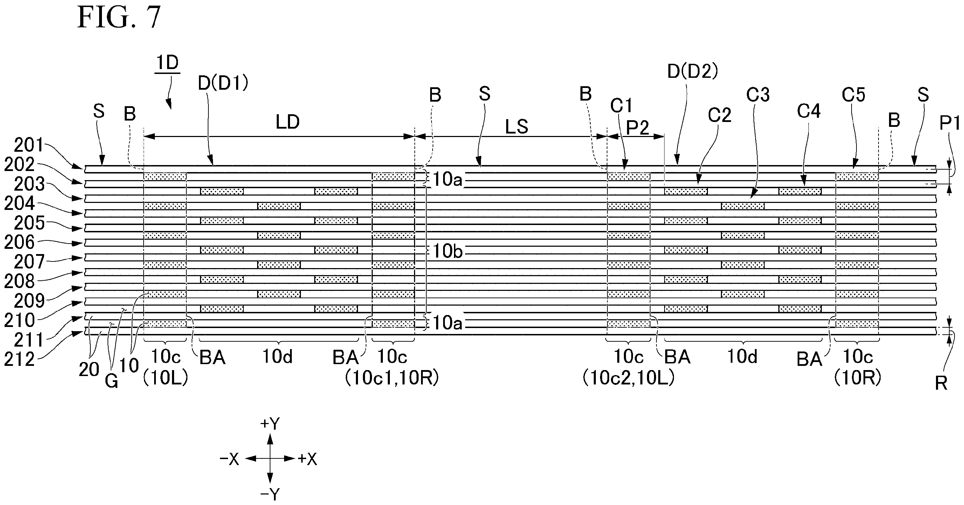

For example, in the embodiment described above, the number of the non-boundary connection parts 10d included in each of the columns C2 to C4 of each high-density region D has been equal to or less than the number (six) of the first boundary connection parts 10c1, but a configuration of the non-boundary connection parts 10d is not limited thereto. The number of the non-boundary connection parts 10d included in each of the columns C2 to C4 of each high-density region D may be less than the number of the first boundary connection parts 10c1. As a specific example, as in an optical fiber ribbon 1D illustrated in FIG. 7, the number of non-boundary connection parts 10d included in the third column C3 may be smaller than the number of first boundary connection parts 10c1.

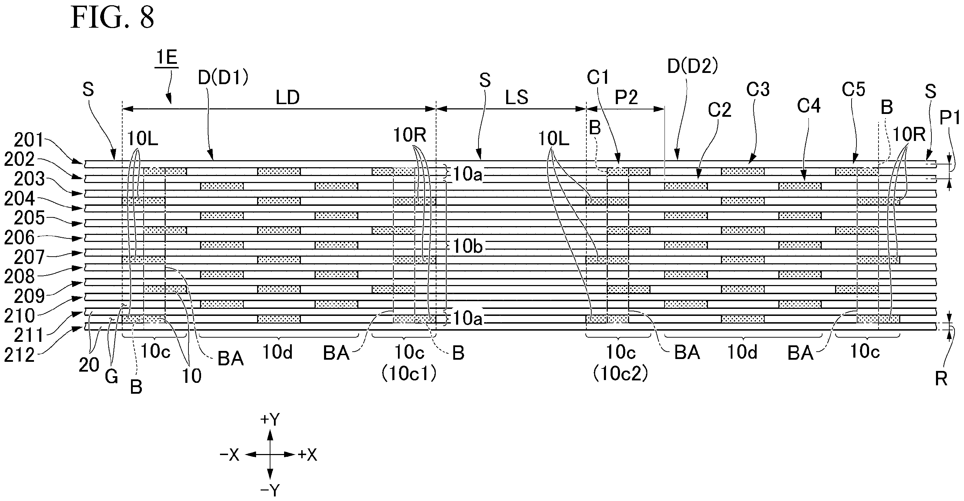

Also, as in an optical fiber ribbon 1E illustrated in FIG. 8, the boundary connection parts 10c may be offset from each other in the longitudinal direction X. In other words, the high-density region D may include the boundary connection part 10c that does not correspond to either a right end connection part 10R or a left end connection part 10L. In the example of FIG. 8, each high-density region D includes three right end connection parts 10R and three left end connection parts 10L. Also in the example of FIG. 8, each high-density region D has a boundary region BA in which a plurality of boundary connection parts 10c overlap each other in a disposition direction Y, similarly to the embodiment described above. The boundary B extends along a side of the boundary region BA. At this time, similarly to the embodiment described above, a lower limit value and an upper limit value may be set for a dimension LS. With this configuration, the same operation and effect as those of the above-described embodiment are obtained.

For example, in the embodiment described above, the optical fiber ribbons 1A to 1C have had the plurality of high-density regions D and the plurality of low-density regions S, but configurations of the optical fiber ribbons 1A to 1C are not limited thereto. For example, the optical fiber ribbons 1A to 1C may have only one high-density region D and only one low-density region S.

Also, a disposition pattern of the plurality of connection parts 10 included in each high-density region D may not be the same among the high-density regions D. Similarly, a disposition pattern of the connection parts 10 included in each low-density region S may not be the same among the low-density regions S.

Also, a shape of each of the regions D and S may not be substantially rectangular. In other words, each boundary B may not be parallel to the disposition direction Y. However, since a shape of the fusion splicer (holder) is generally rectangular, the configuration in which the boundary B is parallel to the disposition direction Y is preferable.

Also, the plurality of connection parts 10 included in each high-density region D may not form the columns C1 to C5. In other words, the plurality of connection parts 10 may be randomly disposed in each high-density region D. Similarly, the plurality of connection parts 10 may be randomly disposed in each low-density region S.

Further, the gap G may not be provided between two optical fibers 20 adjacent in the disposition direction Y. In other words, two adjacent optical fibers 20 may be in contact with each other. Even with such a configuration, it is possible to intermittently connect two adjacent optical fibers 20 by the connection part 10.

In addition, the components in the above-described embodiments may be appropriately replaced with well-known components within a range not departing from the meaning of the present invention, and the embodiments and modified examples described above may be appropriately combined.

[Reference Signs List]

1A, 1B, 1C, 1D, 1E Optical fiber ribbon
10 Connection part
10a Outermost connection part
10b Intermediate connection part
10c1 First boundary connection part
10c2 Second boundary connection part
10d Non-boundary connection part
20 Optical fiber
201 First fiber (outermost fiber)
202 to 211 Second fiber to eleventh fiber (intermediate fiber)
212 Twelfth fiber (outermost fiber)
G Gap
D1 First high-density region
D2 Second high-density region
S Low-density region
B Boundary
P1 Pitch
R Fiber diameter (diameter)
d1 to d4 Dimension
I1 to I2 Disposition interval
X Longitudinal direction
Y Disposition direction

**Claims**

1. An optical fiber ribbon comprising:

a plurality of optical fibers disposed in a disposition direction perpendicular to a longitudinal direction; and
a plurality of connection parts formed between two optical fibers adjacent in the disposition direction to connect the two optical fibers, wherein
the plurality of connection parts are disposed intermittently in the longitudinal direction and the disposition direction,
the optical fiber ribbon has a first high-density region and a low-density region adjacent in the longitudinal direction,
at least two connection parts having different positions from each other in the longitudinal direction and disposition direction among the plurality of connection parts are disposed in the first high-density region,
a number density of the connection parts in the low-density region is lower than a number density of the connection parts in the first high-density region, and

when an end edge of the low-density region on a side opposite to the first high-density region is brought closer to the first high-density region in the longitudinal direction in a state in which the first high-density region is fixed and a tension of 100 gf is applied to the entire optical fiber ribbon, a maximum value of an amount of increase in transmission loss occurring in light with a wavelength of 1550 nm propagating through the optical fiber is 1 dB or less.

2. The optical fiber ribbon according to claim 1, wherein, when an end edge of the low-density region on a side opposite to the first high-density region is caused to rotate four times around a rotation axis parallel to the longitudinal direction in a state in which the first high-density region is fixed and a tension of 100 gf is applied to the entire optical fiber ribbon, an amount of increase in transmission loss occurring in light with a wavelength of 1550 nm propagating through the optical fiber is 1 dB or less.

3. The optical fiber ribbon according to claim 1 or 2, wherein, when a dimension of the low-density region in the longitudinal direction is LS, LS $\geq$ 5.0 cm is satisfied.

4. The optical fiber ribbon according to any one of claims 1 to 3, wherein a pitch at which the plurality of optical fibers are disposed in the disposition direction is larger than a diameter of each of the plurality of optical fibers.

5. The optical fiber ribbon according to any one of claims 1 to 4, wherein

the plurality of optical fibers include a pair of outermost fibers positioned at outermost sides in the disposition direction, and a plurality of intermediate fibers positioned between the pair of outermost fibers in the disposition direction,

the plurality of connection parts include an outermost connection part in contact with either the pair of outermost fibers, and an intermediate connection part connecting two intermediate fibers, and

a dimension of the outermost connection part in the longitudinal direction is larger than a dimension of the intermediate connection part in the longitudinal direction.

6. The optical fiber ribbon according to any one of claims 1 to 5, wherein

the plurality of optical fibers include a pair of outermost fibers positioned at outermost sides in the disposition direction, and a plurality of intermediate fibers positioned between the pair of outermost fibers in the disposition direction,

the plurality of connection parts include an outermost connection part in contact with either the pair of outermost fibers, and an intermediate connection part connecting two intermediate fibers, and

a disposition interval of the outermost connection part in the longitudinal direction is smaller than a disposition interval of the intermediate connection part in the longitudinal direction.

7. The optical fiber ribbon according to any one of claims 1 to 6, wherein

the plurality of connection parts include a first boundary connection part positioned at a boundary between the first high-density region and the low-density region, and a non-boundary connection part separated from the boundary, and

a dimension of the first boundary connection part in the longitudinal direction is larger than a dimension of the non-boundary connection part in the longitudinal direction.

8. The optical fiber ribbon according to any one of claims 1 to 7, wherein

the plurality of optical fibers include a pair of outermost fibers positioned outermost sides in the disposition direction, and an intermediate fiber positioned between the pair of outermost fibers in the disposition direction,

the plurality of connection parts include a first boundary connection part positioned at a boundary between the first high-density region and the low-density region, and

the first boundary connection part connects the outermost fiber and the intermediate fiber.

9. The optical fiber ribbon according to any one of claims 1 to 8, wherein

the plurality of connection parts include a plurality of first boundary connection parts positioned at a boundary between the first high-density region and the low-density region and overlapping each other in the disposition direction, and
all the plurality of optical fibers are in contact with any one of the plurality of first boundary connection parts.

10. The optical fiber ribbon according to any one of claims 1 to 9, wherein

the plurality of connection parts include a plurality of first boundary connection parts positioned at a boundary between the first high-density region and the low-density region and overlapping each other in the disposition direction, and one or more non-boundary connection parts separated from the boundary, and
the number of the first boundary connection parts is equal to or more than the number of the non-boundary connection parts overlapping in the disposition direction.

11. The optical fiber ribbon according to any one of claims 1 to 10, further comprising a second high-density region disposed at a position different from the first high-density region in the longitudinal direction and disposed to be in contact with the low-density region in the longitudinal direction, wherein

at least two connection parts having different positions from each other in the longitudinal direction and disposition direction among the plurality of connection parts are disposed in the second high-density region,
a number density of the connection parts in the second high-density region is higher than a number density of the connection parts in the low-density region,
the plurality of connection parts include a plurality of first boundary connection parts positioned at a boundary between the first high-density region and the low-density region and overlapping each other in the disposition direction, and a plurality of second boundary connection parts positioned at a boundary between the second high-density region and the low-density region and overlapping each other in the disposition direction, and
a disposition pattern of the plurality of second boundary connection parts is the same as a disposition pattern of the plurality of first boundary connection parts.

# FIG. 1

1A

D(D1)

D(D2)

S  B  B  S  B  C1  C2  C3  C4  C5  B  S

LD  LS  P2  P1

201
202  10a
203
204
205  10b
206
207
208
209  10a
210
211
212

20  10  10c  BA  10d  BA  10c  10c  BA  10d  BA  10c
G  (10L)  (10c1,10R)  (10c2,10L)  (10R)

II
II

R

+Y
−X  +X
−Y

EP 4 414 762 A1

FIG. 2

EP 4 414 762 A1

FIG. 3A

KINK TEST: OPTICAL FIBER a

FIG. 3B

KINK TEST: OPTICAL FIBER b

Legend:
- ○ LD:LS=4.5cm:4.5cm
- ◉ LD:LS=4.5cm:5cm
- × LD:LS=4.5cm:6cm
- ◇ LD:LS=4.5cm:7.5cm
- ■ LD:LS=4.5cm:9cm
- ◆ LD:LS=4.5cm:10cm

Y-axis: AMOUNT OF INCREASE IN LOSS [dB]
X-axis: KINK LENGTH [cm]

EP 4 414 762 A1

# FIG. 3C

KINK TEST

# FIG. 4A

TWIST TEST: OPTICAL FIBER a

EP 4 414 762 A1

FIG. 4B

TWIST TEST: OPTICAL FIBER b

Legend:
- □ LD:LS=4.5cm:4cm
- ○ LD:LS=4.5cm:4.5cm
- ◎ LD:LS=4.5cm:5cm
- × LD:LS=4.5cm:6cm
- ◇ LD:LS=4.5cm:7.5cm
- ■ LD:LS=4.5cm:9cm
- ◆ LD:LS=4.5cm:10cm

X-axis: NUMBER OF TIMES OF TWIST [TIMES]
Y-axis: AMOUNT OF INCREASE IN LOSS [dB]

FIG. 4C

FIG. 5

FIG. 6

EP 4 414 762 A1

FIG. 7

EP 4 414 762 A1

FIG. 8

EP 4 414 762 A1

**EP 4 414 762 A1**

## INTERNATIONAL SEARCH REPORT

| | International application No. |
| --- | --- |
| | **PCT/JP2022/036649** |

### A. CLASSIFICATION OF SUBJECT MATTER

*G02B 6/44*(2006.01)i
FI: G02B6/44 381; G02B6/44 371

According to International Patent Classification (IPC) or to both national classification and IPC

### B. FIELDS SEARCHED

Minimum documentation searched (classification system followed by classification symbols)
G02B6/44

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2020-181048 A (FURUKAWA ELECTRIC CO LTD) 05 November 2020 (2020-11-05) claims 1-2, paragraphs [0004], [0018]-[0026], fig. 1-2(a) | 1-3 |
| Y | | 4-11 |
| Y | JP 2021-43363 A (FUJIKURA LTD.) 18 March 2021 (2021-03-18) paragraph [0029] | 4-11 |
| Y | JP 2011-169937 A (FURUKAWA ELECTRIC CO LTD) 01 September 2011 (2011-09-01) paragraphs [0024], [0027], fig. 4 | 5-11 |
| A | JP 2014-95560 A (SWCC SHOWA CABLE SYSTEMS CO LTD) 22 May 2014 (2014-05-22) entire text, all drawings | 1-11 |
| A | JP 2012-234122 A (FUJIKURA LTD.) 29 November 2012 (2012-11-29) entire text, all drawings | 1-11 |
| A | JP 2014-215493 A (NIPPON TELEGRAPH & TELEPHONE) 17 November 2014 (2014-11-17) entire text, all drawings | 1-11 |

✓ Further documents are listed in the continuation of Box C.　　✓ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **15 November 2022** | **06 December 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

| International application No. |
| --- |
| **PCT/JP2022/036649** |

**C.     DOCUMENTS CONSIDERED TO BE RELEVANT**

| Category* | Citation of document, with indication, where appropriate, of the relevant passages | Relevant to claim No. |
| --- | --- | --- |
| A | WO 2019/011417 A1 (PRYSMIAN S.P.A.) 17 January 2019 (2019-01-17) entire text, all drawings | 1-11 |

Form PCT/ISA/210 (second sheet) (January 2015)

EP 4 414 762 A1

<table>
<tr><th colspan="2">INTERNATIONAL SEARCH REPORT<br>Information on patent family members</th><th colspan="2">International application No.<br><br>PCT/JP2022/036649</th></tr>
<tr><th>Patent document<br>cited in search report</th><th>Publication date<br>(day/month/year)</th><th>Patent family member(s)</th><th>Publication date<br>(day/month/year)</th></tr>
<tr><td>JP 2020-181048 A</td><td>05 November 2020</td><td>(Family: none)</td><td></td></tr>
<tr><td>JP 2021-43363 A</td><td>18 March 2021</td><td>WO 2021/049157 A1<br>EP 4030207 A1<br>paragraph [0030]<br>TW 202111365 A<br>KR 10-2022-0004209 A<br>CN 114041075 A<br>AU 2020347613 A1<br>CA 3149724 A1<br>US 2022/0317375 A1</td><td></td></tr>
<tr><td>JP 2011-169937 A</td><td>01 September 2011</td><td>(Family: none)</td><td></td></tr>
<tr><td>JP 2014-95560 A</td><td>22 May 2014</td><td>(Family: none)</td><td></td></tr>
<tr><td>JP 2012-234122 A</td><td>29 November 2012</td><td>(Family: none)</td><td></td></tr>
<tr><td>JP 2014-215493 A</td><td>17 November 2014</td><td>(Family: none)</td><td></td></tr>
<tr><td>WO 2019/011417 A1</td><td>17 January 2019</td><td>EP 3652575 A1<br>AR 112653 A1<br>KR 10-2020-0023474 A<br>AU 2017423261 A1<br>CN 110998402 A<br>CA 3067738 A1<br>BR 112020000333 A2<br>CL 2020000048 A1<br>NZ 760306 A<br>US 2020/0271879 A1<br>MX 2020000069 A<br>CO 2019014119 A2</td><td></td></tr>
</table>

Form PCT/ISA/210 (patent family annex) (January 2015)

33

**REFERENCES CITED IN THE DESCRIPTION**

**Patent documents cited in the description**

- US 63251692
- JP 2021043363 A

- JP 2013182157 A